(19) Europäisches Patentamt
European Patent Office
Office européen des brevets

(11) EP 0 567 377 B1

(12) **FASCICULE DE BREVET EUROPEEN**

(45) Date de publication et mention de la délivrance du brevet:
**21.06.2000 Bulletin 2000/25**

(51) Int. Cl.[7]: **G06T 7/20**

(21) Numéro de dépôt: **93400996.0**

(22) Date de dépôt: **16.04.1993**

(54) **Procédé de pistage à partir d'images d'éléments déformables, et/ou aux contours fortement bruités**

Verfolgungsverfahren aus verformbaren Bildelementen und/oder Bildelementen mit stark venauschten Kanten

Tracking process from deformable element images and/or images with highly noisy edges

(84) Etats contractants désignés:
**CH DE DK FR LI**

(30) Priorité: **21.04.1992 FR 9204831**

(43) Date de publication de la demande:
**27.10.1993 Bulletin 1993/43**

(73) Titulaire: **THOMSON-CSF**
**75008 Paris (FR)**

(72) Inventeurs:
- **Garrec, Patrick**
**F-92402 Courbevoie Cédex (FR)**
- **Reboux, Véronique**
**F-92402 Courbevoie Cédex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**FR-A- 2 538 653**

- **PATENT ABSTRACTS OF JAPAN vol. 15, no. 268 (P-1224)8 Juillet 1991 & JP-A-3 089 190 ( SHIMADZU CORPORATION ) 15 Avril 1991**
- **COMPUTER VISION GRAPHICS AND IMAGE PROCESSING vol. 53, no. 3, Mai 1991, DULUTH, MA US pages 283 - 290 , XP200573 STERLING J. CRABTREE ET AL. 'A fast and accurate erosion-dilation method suitable for microcomputers'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 567 377 B1

Printed by Xerox (UK) Business Services
2.16.7 (HRS)/3.6

## Description

La présente invention concerne un procédé de pistage à partir d'images d'éléments déformables et/ou aux contours fortement bruités.

Un domaine particulier d'application de l'invention consiste dans le pistage de perturbations météorologiques à partir d'images provenant, par exemple, d'un écran radar. Les nuages sont des objets déformables dont la forme évolue lentement dans le temps par rapport aux vitesses de traitements d'images existants, et dont la vitesse et l'accélération sont sensiblement continues. La déformation de nuages rend difficile la reconnaissance d'un même nuage d'une image à l'autre, et cette difficulté est accrue lorsque l'on désire calculer la vitesse d'un nuage. D'autre part, les contours des nuages sont en général très bruités, et il est important, pour pouvoir extraire toute information, d'affiner au maximum ces contours.

Un document (Patent Abstracts of Japan vol. 15, n° 268 (P-1224) 8 Juillet 1991 et JP-A-3089190 (SHIMADZU CORPORATION) décrit une méthode de traitement d'image permettant d'améliorer l'exactitude d'un diagnostic immédiat.

Le but de la présente invention est de proposer un procédé permettant d'extraire facilement des contours fermés et très fins des objets afin de pouvoir faire une reconnaissance de la forme des objets d'une image à l'autre, et en déduire leurs vitesses.

Plus précisément, l'invention concerne un procédé de pistage d'éléments déformables et/ou aux contours fortement bruités tel que défini par la revendication 1.

Le procédé est particulièrement adapté au pistage d'objets lentement déformables par rapport à deux acquisitions d'images successives (pour les nuages, cela dépend de la rotation de l'antenne radar).

L'invention sera mieux comprise au vu de la description suivante, faite en référence aux figures annexées.

- La figure 1 est un synoptique général du procédé selon l'invention ;
- La figure 2 est un synoptique du pré-traitement 1 de la figure 1 ;
- La figure 3 est un autre synoptique possible du prétraitement ;
- La figure 4 montre les étapes à réaliser pour l'extraction des contours ;
- La figure 5 montre l'ordre dans lequel chaque pixel d'un contour doit être testé, conformément à l'invention.

La figure 1 montre un synoptique du procédé selon l'invention, synoptique sur lequel ont été représentées les étapes générales du procédé selon l'invention. Chaque étape sera détaillée par la suite en référence à d'autres figures :

D'après la figure 1, la donnée d'entrée sur laquelle on applique le procédé selon l'invention, consiste en une image de N lignes et de M colonnes, constituée d'un nombre NxM de points élémentaires ou pixels. L'image contient des objets de préférence lentement déformables, typiquement des nuages, dont il va falloir extraire certains paramètres, comme nous le détaillerons plus loin. On considère que l'image provient d'un écran noir et blanc, par exemple d'un écran radar. Pour rendre compte des différents niveaux de gris, les pixels sont codés sur Q niveaux de luminance possibles, allant du noir (niveau 0) au blanc (niveau Q-1). Sur cette image brute, les pixels qui sont à l'intérieur des nuages sont blancs, ceux qui sont éloignés des nuages sont noirs. Entre ces deux extrêmes, notamment pour les pixels proches ou appartenant aux contours des nuages, les luminances traduisent différents niveaux de gris, codés entre 0 et Q-1.

La première étape du procédé selon l'invention consiste à effectuer, sur cette image brute, un pré-traitement 1 de mise en forme de l'image. Le but de ce pré-traitement est de faire ressortir au mieux les nuages (en blanc) sur le ciel (en noir). Si l'on se contente de faire un seuillage de l'image brute pour obtenir une image binaire avec les deux niveaux 0 et Q-1 de luminance, on fera apparaître des nuages blancs aux contours très irréguliers à cause du bruit. Or, pour que la suite du traitement soit possible, il est essentiel d'effectuer en outre, un lissage des contours de façon à approximer au mieux la forme des nuages. Cette approximation est en effet primordiale pour la phase de reconnaissance des formes de nuages d'une image à l'autre. Nous verrons par la suite (description de la figure 2) que la Demanderesse a choisi d'effectuer une série d'étapes ayant pour rôle d'éroder puis de dilater les contours des nuages, de façon à ce que le résultat global soit un lissage des contours.

A l'issue de ce pré-traitement 1, l'image obtenue est toujours composée de NxM pixels, mais dont les valeurs de luminance sont à deux niveaux, le niveau 0 et le niveau Q-1. Tous les nuages de l'image, dont les contours ont été lissés selon l'invention, sont par exemple blancs, sur un ciel noir.

Compte tenu du choix fait par la Demanderesse sur les paramètres à partir desquels les différentes informations seront déduites (reconnaissance de forme, vitesse de nuage), il est nécessaire de procéder à l'extraction des contours $C_k$ à partir de l'image issue du pré-traitement 1. C'est la deuxième étape du procédé selon l'invention, référencée 2 sur la figure 1. Là encore, pour assurer la faisabilité de la suite du traitement, l'extraction 2 des contours $C_k$ selon l'invention doit garantir l'obtention de contours fermés. Nous verrons en effet par la suite que le principe de l'invention repose sur l'assimilation d'un objet lentement déformable à un objet indéformable, assimilation qui permettra d'appliquer des méthodes de calcul propres à la cinématique des objets indéformables pour calculer la vitesse des nuages. En outre, l'extraction 2 des contours $C_k$ selon l'invention permet avantageusement d'obtenir des contours $C_k$ dont l'épaisseur ne dépasse pas un pixel. Cette épaisseur, ramenée à son minimum, permet de réduire de façon optimale les temps de traitements des étapes suivantes. L'image obtenue à l'issue de l'extraction 2 des contours $C_k$ est à nouveau une image binaire dont le niveau de luminance (Q-1) est préférentiellement attribué aux pixels des contours $C_k$ extraits, le niveau de luminance 0 étant attribué à tous les pixels restants.

La troisième étape du procédé selon l'invention consiste en l'extraction 3 des paramètres significatifs de chaque contour $C_k$. On entend par paramètres significatifs les paramètres qui permettent d'obtenir d'une part, un critère simple pour reconnaître les formes des nuages d'une image à l'autre, et d'autre part, une méthode simple de calcul de la vitesse de chaque nuage. Comme nous l'avons dit précédemment, les étapes précédentes permettent d'assimiler le nuage à un objet indéformable. Or, pour les objets indéformables, un critère simple de reconnaissance consiste en la comparaison du périmètre de ces objets d'une image à l'autre. De même, le calcul de la vitesse d'un objet indéformable se déduit aisément du calcul du déplacement du centre de gravité de cet objet. Les deux paramètres significatifs choisis par la Demanderesse sont donc le périmètre $P_k$ et le centre de gravité $G_k$ d'un contour $C_k$. Nous détaillerons plus par la suite l'extraction de ces deux paramètres à partir de l'image obtenue après l'extraction 2 des contours $C_k$.

A l'issue de la troisième étape, nous connaissons donc les périmètres $P_k$ et les centres de gravité $G_k$ de tous les contours $C_k$ présents dans l'image.

L'étape suivante consiste en la reconnaissance 4 des contours d'une image à l'autre. Toujours dans le cadre de l'assimilation d'un nuage à un objet indéformable, on peut considérer que les périmètres $P_k$ de l'image en cours de traitement sont très peu différents des périmètres $P_{k'}$ relatifs aux mêmes contours trouvés lors du traitement de l'image précédente. Comme il est peu probable que deux nuages différents possèdent le même périmètre, une simple comparaison des périmètres $P_k$ avec les périmètres $P_{k'}$ et des centres de gravité $G_k$ et $G_{k'}$ suffit pour reconnaître un contour.

La dernière étape du traitement, référencée 5 sur la figure 1, consiste alors à calculer, pour chaque couple de périmètres ($P_k$, $P_{k'}$) correspondant au même contour $C_k$, le déplacement du centre de gravité de $C_k$ pour aller de la position $G_{k'}$ à la position $G_k$. De ce déplacement, on déduit aisément la vitesse de ce centre de gravité, et donc une estimation de la vitesse du nuage.

Nous allons à présent détailler successivement les différentes étapes du procédé selon l'invention.

La figure 2 détaille le pré-traitement 1 de mise en forme de l'image.

La première étape consiste en un seuillage 11 de l'image brute composée de NxM pixels, codés sur Q niveaux de luminance, par exemple entre 0 et Q-1. Ce seuillage 11 consiste à mettre tous les pixels dont la luminance codée est supérieure à un seuil S donné, à (Q-1), et tous les autres pixels à 0. Le seuil S étant choisi convenablement, par exemple de l'ordre de Q/2, on obtient une visualisation des nuages représentés en blanc sur un fond noir. Les contours de ces nuages sont cependant très irréguliers et ne permettent pas la reconnaissance simple des nuages d'une image à l'autre. Le procédé selon l'invention propose donc d'effectuer un lissage 12 des contours, ce lissage comportant une première phase d'érosion 13 de l'image, suivie d'une seconde phase de dilatation 14 de l'image. La phase d'érosion 13 tient sa dénomination du fait qu'elle permet d'éliminer les pixels blancs isolés. Elle consiste à promener une fenêtre carrée de dimension impaire sur l'image, et de remplacer la luminance du pixel central de la fenêtre par le résultat obtenu en effectuant un ET logique entre ce pixel central et ses voisins.

La phase de dilatation 14 est duale de la précédente en ceci qu'elle permet d'éliminer les pixels noirs isolés. En utilisant la même fenêtre que précédemment, on effectue cette fois-ci un OU logique entre le pixel central et ses voisins.

Le lissage des contours obtenu par cette succession d'érosion et de dilatation déforme un peu l'objet. Cependant, le traitement est identique sur toutes les images et permet de réduire considérablement le bruit.

Les études de la Demanderesse ont montré que l'on pouvait procéder autrement pour effectuer le lissage 12. Cette variante, illustrée sur la figure 3, consiste à utiliser la convolution de l'image issue du seuillage 11 (figure 2) par une matrice de filtrage particulière réalisant une moyenne des luminances.

Nous rappelons. ci-après le principe de la convolution de l'image par une matrice carrée de dimension 3, pour simplifier les calculs :

soit la matrice A:

$$\begin{pmatrix} a & b & c \\ d & e & f \\ g & h & k \end{pmatrix}$$

Soit L(i, j) la luminance codée du pixel situé sur la ligne indicée par l'entier i et la colonne indicée par l'entier j.
Pour chaque pixel (i, j), on calcule l'expression:

$$a \times L\,(i-1, j-1) + b \times L\,(i-1, j) + c \times L\,(i-1, j+1) + d \times L\,(i, j-1) + e \times L\,(i, j) + f \times L\,(i, j+1) + g \times L\,(i+1, j-1) + h \times L\,(i+1, j+1) + k \times L\,(i+1, j+1). \quad (1)$$

La somme précédente s'effectue modulo Q. Le résultat obtenu appartenant à l'intervalle [0, *Q*—1], il peut être considéré comme une valeur de luminance L' (i, j) que l'on affecte au pixel (i, j).
La matrice particulière utilisée selon l'invention est une matrice carrée unitaire de dimension P, P étant entier impair inférieur aux entiers N et M.
L'application de la relation 1 dans ce cas revient à remplacer la luminance L (i, j) du pixel' (i, j) par la luminance L' (i, j) représentant la moyenne des luminances des pixels voisins du pixel (i, j).
La Demanderesse a montré que la succession des étapes suivantes, à savoir :

- une première convolution 121 de l'image issue du seuillage 11 par la matrice carrée unitaire ;
- un premier seuillage 122 de l'image convoluée avec un seuil égal préférentiellement à Q/2 ;
- une première inverse vidéo 123 de l'image ;
- une seconde convolution 121' de l'image inversée par la même matrice carrée unitaire ;
- un second seuillage 122' de l'image convoluée avec un seuil sensiblement égal à Q/2 ;
- une seconde inverse vidéo 123' ;
  réalisait entièrement le lissage 12 comprenant les phases d'érosion 13 et de dilatation 14.

A chacune des deux convolutions 121, 121' précédentes, il est préférable de veiller à ne pas remplacer la luminance L (i, j) du pixel (i, j) par la luminance L' (i, j) tant que le pixel (i, j) est utilisé dans la convolution d'autres pixels. Ceci fausserait en effet les résultats. Il faut donc, parallèlement à la convolution 124 d'un pixel (i, j), effectuer un stockage 125 des luminances L' (i, j). Le remplacement 126 des luminances se fait alors soit lorsque toute l'image a été convoluée, soit préférentiellement lorsque l'on ne se sert plus du pixel (i, j) dans la convolution.
A l'issue du pré-traitement 1, on est en présence d'une image comprenant des pixels noirs (0) appartenant au ciel, ou blancs (Q-1) appartenant aux nuages (contours compris). Les contours ont , selon l'invention, subi un lissage. Conformément à la figure 1, l'image obtenue va subir une étape d'extraction 2 des contours $C_k$ des objets, dont le détail est schématisé sur la figure 4:
Il est classique d'extraire les contours d'objets sur une image en utilisant une matrice dite de Laplace. Cette matrice est utilisée pour vider l'intérieur des objets, et ne conserver que leurs contours à l'écran. Elle est basée sur le principe des filtres Laplacien qui consiste à calculer la dérivée seconde de l'image. Il existe de nombreuses matrices de Laplace et le choix d'une matrice particulière a conduit la Demanderesse à analyser plus finement les caractéristiques d'un pixel d'un contour:
Pour qu'un pixel (i, j) appartienne à un contour, il faut et il suffit que les deux conditions suivantes soient réalisées en même temps:

- la luminance L (i, j) de ce pixel est codée à Q-1 ;
- au moins un de ses quatre pixels voisins pris sur la même ligne i et la même colonne j possède une luminance codée à 0.

Seuls les quatre pixels voisins tels que définis précédemment doivent être étudiés. En effet, la Demanderesse s'est aperçue que l'étude des huit voisins possibles d'un pixel pourrait conduire à classer par erreur des pixels comme appartenant à un contour.
Le choix de la matrice de Laplace découle des observations précédentes: comme on ne s'intéresse pas aux voisins d'un pixel central qui ne sont pas sur la même ligne ou sur la même colonne, il faut mettre des coefficients nuls aux places correspondantes.
Les autres coefficients sont choisis de façon à pondérer les contributions des pixels considérés. Ainsi, la matrice de Laplace particulière choisie selon l'invention est une matrice carrée de dimension 3, dont les coefficients sont

$$\begin{pmatrix} 0 & -1 & 0 \\ -1 & 4 & -1 \\ 0 & -1 & 0 \end{pmatrix}$$

à un facteur multiplicatif $\alpha$ près.

En se référant à la figure 4, l'extraction 2 des contours consiste donc à effectuer une convolution 21 de l'image par la matrice de Laplace choisie. Comme précédemment, il est préférable, parallèlement à la convolution 211 d'un pixel (i, j) donné, de faire un stockage 212 de la valeur L'(i, j) résultante, et de n'effectuer le remplacement 213 de la luminance que lorsque le pixel (i, j) n'es! plus utilisé pour la convolution d'autres pixels. D'autre part, les pixels qui sont proches du bord de l'image n'ont, par construction, pas de voisins. Pour pouvoir appliquer la convolution à ces pixels particuliers, le procédé selon l'invention prévoit de créer des voisins fictifs dont la valeur de luminance est 0. Ceci permet de garantir l'obtention d'un contour fermé, même sur les bords de l'image, ce qui est indispensable pour la suite du traitement.

Suivant les pixels considérés de l'image, les résultats de la convolution 21 seront les suivants :

- un pixel (i, j) du contour est caractérisé par sa luminance L (i, j) qui est à Q-1 et par un, deux, trois ou quatre voisins éteints (luminance à 0). Les luminances L' (i, j) seront donc respectivement Q-1, Q-2, Q-3, ou Q-4 ;
- un pixel (i, j) interne au nuage est caractérisé par sa luminance L (i, j) qui est à Q-1, tout comme celles de ses quatre voisins. La luminance L'(i, j) sera donc toujours égale à 0 ;
- un pixel (i, j) externe au nuage est caractérisé par sa luminance L (i, j) qui est à 0, et par un, deux, trois ou quatre voisins éteints (luminance à 0). Les luminances L' (i, j) seront donc respectivement 3, 2, 1 ou 0.

On a bien abouti au résultat escompté, à savoir mettre à 0 les pixels internes aux nuages, et laisser les autres sensiblement invariants.

L'image obtenue après la convolution 21 contient des pixels dont les luminances appartiennent au groupe $\{Q—1, Q—2, Q—3, Q—4\}$. et d'autres pixels dont les luminances appartiennent au groupe {0,1,2,3}. Le procédé selon l'invention propose d'effectuer un seuillage 22 de cette image avec un seuil fixé par exemple à Q/2 de manière à ce que seuls les contours soient allumés, avec une luminance Q-1.

Conformément à la figure 1, la troisième étape du procédé selon l'invention consiste en l'extraction 3 des paramètres significatifs de chaque contour $C_k$ de l'image. Comme nous l'avons expliqué précédemment, ces paramètres significatifs sont, d'une part les périmètres $P_k$, et d'autre part, les centres de gravité $G_k$ des contours $C_k$.

Le relevé des contours se fait en parcourant, objet par objet, les points de contours, c'est-à-dire les seuls points de l'image issue du traitement 2 dont la luminance n'est pas à 0. Le procédé selon l'invention prévoit de tester chaque pixel des contours en cherchant, pour chacun, lesquels de ses huit voisins sont allumés. Pour ce faire, on regarde les huit voisins dans un ordre déterminé tel que celui schématisé sur la figure 5. Cet ordre doit être cohérent avec le balayage de l'écran, c'est-à-dire de haut en bas et de gauche à droite dans l'exemple de la figure 5 dans lequel le pixel testé est le pixel central et l'ordre correspond à l'ordre numéroté de 1 à 8. Cette recherche s'effectue de manière récursive, c'est-à-dire que, dès que l'on rencontre un voisin allumé, on entame une recherche identique sur ce voisin. La récursivité impose de faire particulièrement attention si l'on ne veut pas oublier certains points appartenant aux contours, ou encore passer plusieurs fois sur un même point. De plus, il faut pouvoir facilement passer d'un contour à l'autre.

Les études de la Demanderesse ont montré la nécessité d'associer à chaque pixel des contours une variable d'état pouvant être dans quatre états différents:

- Etat 0 : pixel non testé
- Etat 1 : pixel appartenant au contour du pixel testé mais n'ayant pas encore été testé
- Etat 2 : pixel appartenant au contour du pixel testé et ayant subi le test
- Etat 3 : pixel appartenant à un contour précédent (donc déjà testé).

Tous les pixels d'un même contour sont déterminés lorsqu'on ne trouve plus de voisins allumés en effectuant les tests de proche en proche. Leur variable d'état étant alors dans l'Etat 2, il suffit de les compter pour connaître le périmètre du contour.

Quant aux barycentres $G_k$, leur abscisse et leur ordonnée sont calculées classiquement en effectuant respectivement la moyenne des abscisses et la moyenne des ordonnées des pixels du contour, lesquelles ont été stockées

au préalable, par exemple au moment du relevé des contours.

Conformément à la figure 1, la reconnaissance 4 des contours $C_k$ s'effectue par comparaison des paramètres significatifs $P_k$ et $G_k$ de l'image courante avec les paramètres significatifs $P_{k'}$ et $G_{k'}$ de l'image précédemment traitée. Un contour est reconnu comme représentatif d'un même objet s'il satisfait aux deux conditions suivantes :

- Les barycentres $G_k$ et $G_{k'}$ sont proches, c'est-à-dire que la distance $G_kG_{k'}$ est inférieure à une distance maximum imposée par l'utilisateur ;
- Les périmètres $P_k$ et $P_{k'}$ sont presque égaux, c'est-à-dire que leur différence est inférieure à un seuil prédéterminé.

La vitesse $V_k$ d'un contour $C_k$ reconnu est alors déduite du calcul du déplacement du barycentre. Ceci est possible seulement grâce aux traitements précédents: en effet, comme les contours ont subi un lissage, si le barycentre se déplace, on est sûr que ce déplacement est représentatif d'un déplacement de l'objet.

La mise en oeuvre du procédé selon l'invention s'effectue très avantageusement par ordinateur, en raison des vitesses rapides de traitement.

## Revendications

**1.** Procédé de pistage d'éléments déformables et/ou aux contours fortement bruités, à partir d'images composées d'un nombre entier N de lignes et M de colonnes, et d'un nombre NxM de pixels codés suivant un nombre entier Q de valeurs de luminance, le procédé consistant à :

- effectuer, sur chaque image, un pré-traitement (1) de mise en forme de l'image afin de lisser les contours ;
- extraire (2), sur chaque image pré-traitée, des contours fermés et dont les épaisseurs ne dépassent pas un pixel ;
- extraire (3), pour chaque contour fermé, des paramètres significatifs des contours ;
- comparer, d'une image à l'autre, les paramètres obtenus de façon à reconnaître (4) la forme d'un élément, puis en déduire (5) sa vitesse, caractérisé en ce que l'extraction (2) des contours consiste en :
- une convolution (21) de l'image issue du pré-traitement (1) par une matrice de Laplace de coefficients

$$\begin{pmatrix} 0 & -1 & 0 \\ -1 & 4 & -1 \\ 0 & -1 & 0 \end{pmatrix}$$

  à un facteur multiplicatif $\alpha$ près.
- un seuillage (22) de l'image convoluée à un seuil sensiblement égal à Q/2, ladite convolution (21) consistant en :
- une convolution (211) d'un pixel i, j de luminance L (i, j) par ladite matrice de Laplace ;
- un stockage (212) du résultat L' (i, j) de la convolution ;
- un remplacement (213) de L (i, j) par L' (i, j) dès que le pixel i, j n'est plus utilisé dans les convolutions.

**2.** Procédé de pistage selon la revendication 1, caractérisé en ce que le pré-traitement (1) de mise en forme de l'image consiste en :

- un seuillage (11) de l'image à un seuil prédéterminé, permettant de mettre tous les pixels dont le code de luminance est supérieur à un seuil prédéterminé à 0, et tous les autres pixels à (Q -1), de façon à obtenir une image binaire ;
- au moins une succession d'une érosion (13) et d'une dilatation (14) de ladite image binaire donnant un lissage des contours.

**3.** Procédé de pistage selon la revendication 2, caractérisé en ce que la succession d'une érosion (13) et d'une dilatation (14) de l'image binaire est effectuée par :

- une première convolution (121) de l'image binaire par une matrice unitaire de dimension P, P étant un entier impair inférieur aux entiers N et M ;
- un premier seuillage (122) de l'image convoluée à un seuil sensiblement égal à Q/2 ;

- une première inverse vidéo (123) de l'image seuillée ;
- une seconde convolution (121') de l'image inversée par ladite matrice unitaire ;
- un second seuillage (122') de la seconde image convoluée à un seuil sensiblement égal à Q/2 ;
- une seconde inverse vidéo (123').

**4.** Procédé de pistage selon la revendication 3, caractérisé en ce que la première et la seconde convolutions consistent en :

- une convolution (124) d'un pixel i, j de luminance L (i, j) par ladite matrice unitaire ;
- un stockage (125) du résultat L' (i, j) de la convolution ;
- un remplacement (126) de la luminance L (i, j) par la luminance L' (i, j) dès que le pixel i, j n'est plus utilisé dans les convolutions.

**5.** Procédé de pistage selon l'une quelconque des revendications précédentes, caractérisé en ce que les paramètres significatifs des contours sont constitués par le périmètre $P_k$ et le centre de gravité $G_k$ de chaque contour $C_k$.

**6.** Procédé de pistage selon la revendication 5, caractérisé en ce que l'extraction des périmètres $P_k$ des contours $C_k$ consiste à :

- tester, de manière récursive, chaque pixel des contours $C_k$ en cherchant dans un ordre déterminé, lesquels de ses huit voisins sont allumés ;
- associer à chaque pixel, une variable d'état pouvant être dans les quatre états suivants ;

  - Etat 0 : pixel non testé ;
  - Etat 1 : pixel appartenant au contour du pixel testé mais n'ayant pas encore été testé ;
  - Etat 2 : pixel appartenant au contour du pixel testé et ayant subi le test ;
  - Etat 3 : pixel appartenant à un contour précédent

- compter, lorsque le test est fini, tous les pixels pour lesquels la variable d'état est dans l'Etat 2.

**7.** Procédé de pistage selon la revendication 6, caractérisé en ce que l'ordre prédéterminé correspond au balayage de l'écran.

**8.** Procédé de pistage selon l'une quelconque des revendications 5 à 7, caractérisé en ce que les barycentres $G_k$ sont déterminés par leurs abscisses et leurs ordonnées, en effectuant respectivement la moyenne des abscisses et la moyenne des ordonnées des pixels des contours $C_k$.

**9.** Procédé de pistage selon la revendication 8, caractérisé en ce que la forme d'un élément est reconnue (4) si, pour deux images traitées successivement, les deux périmètres $P_{k'}$ et $P_k$ trouvés sont presque égaux et si les deux centres de gravité $G_{k'}$ et $G_k$ sont proches.

**10.** Procédé de pistage selon la revendication 9, caractérisé en ce que la vitesse d'un élément est déduite du déplacement du centre de gravité du point $G_{k'}$ au point $G_k$.

## Claims

**1.** Process for tracking deformable elements and/or those with highly noisy contours, on the basis of images made up of an integer number N of rows and M of columns, and of a number NxM of pixels coded according to an integer number Q of luminance values, the process consisting in:

- performing, on each image, a preprocessing (1) for shaping the image so as to smooth the contours;
- extracting (2), in each preprocessed image, closed contours whose thicknesses do not exceed a pixel;
- extracting (3), for each closed contour, significant parameters of the contours;
- comparing, from one image to another, the parameters obtained so as to recognize (4) the shape of an element, then deducing therefrom (5) its speed, characterized in that the extraction (2) of the contours consists of:
- a convolution (21) of the image emanating from the preprocessing (1) with a Laplace matrix of coefficients

$$\begin{pmatrix} 0 & -1 & 0 \\ -1 & 4 & -1 \\ 0 & -1 & 0 \end{pmatrix}$$

to within a multiplicative factor $\alpha$;

- a thresholding (22) of the convolved image to a threshold substantially equal to Q/2, the said convolution (21) consisting of:
- a convolution (211) of a pixel i, j of luminance L (i, j) with the said Laplace matrix;
- a storing (212) of the result L' (i, j) of the convolution;
- a replacing (213) of L (i, j) by L' (i, j) once the pixel i, j is no longer used in the convolutions.

**2.** Tracking process according to Claim 1, characterized in that the preprocessing (1) for shaping the image consists of:

- a thresholding (11) of the image to a predetermined threshold, making it possible to set all the pixels whose luminance code is greater than a predetermined threshold to 0, and all the other pixels to (Q -1), so as to obtain a binary image;
- at least one succession of an erosion (13) and of a dilatation (14) of the said binary image giving a smoothing of the contours.

**3.** Tracking process according to Claim 2, characterized in that the succession of an erosion (13) and of a dilatation (14) of the binary image is performed by:

- a first convolution (121) of the binary image with a unit matrix of dimension P, P being an odd integer less than the integers N and M;
- a first thresholding (122) of the convolved image to a threshold substantially equal to Q/2;
- a first video inverse (123) of the thresheld image;
- a second convolution (121') of the inverted image with the said unit matrix;
- a second thresholding (122') of the second convolved image to a threshold substantially equal to Q/2;
- a second video inverse (123').

**4.** Tracking process according to Claim 3, characterized in that the first and second convolutions consist of:

- a convolution (124) of a pixel i, j of luminance L (i, j) with the said unit matrix;
- a storing (125) of the result L' (i, j) of the convolution;
- a replacing (126) of the luminance L (i, j) by the luminance L' (i, j) once the pixel i, j is no longer used in the convolutions.

**5.** Tracking process according to any one of the preceding claims, characterized in that the significant parameters of the contours consist of the perimeter $P_k$ and the centre of gravity $G_k$ of each contour $C_k$.

**6.** Tracking process according to Claim 5, characterized in that the extracting of the perimeters $P_k$ of the contours $C_k$ consists in:

- testing, recursively, each pixel of the contours $C_k$ by searching in a determined order for which of its eight neighbours are lit;
- associating with each pixel a state variable which can be in the following four states:

  - State 0 : untested pixel;
  - State 1 : pixel belonging to the contour of the tested pixel but not yet having been tested;
  - State 2 : pixel belonging to the contour of the tested pixel and having undergone the test;
  - State 3 : pixel belonging to a previous contour

- counting, when the test is finished, all the pixels for which the state variable is in State 2.

7. Tracking process according to Claim 6, characterized in that the predetermined order corresponds to the scanning of the screen.

8. Tracking process according to any one of Claims 5 to 7, characterized in that the barycentres $G_k$ are determined by their abscissae and their ordinates, by respectively averaging the abscissae and averaging the ordinates of the pixels of the contours $C_k$.

9. Tracking process according to Claim 8, characterized in that the shape of an element is recognized (4) if, for two successively processed images, the two perimeters $P_{k'}$ and $P_k$ found are almost equal and if the two centres of gravity $G_{k'}$ and $G_k$ are close.

10. Tracking process according to Claim 9, characterized in that the speed of an element is deduced from the displacement of the centre of gravity from the point $G_{k'}$ to the point $G_k$.

**Patentansprüche**

1. Verfahren zur Verfolgung von verformbaren Elementen und/oder stark verrauschten Konturen anhand von Bildern, die aus einer ganzen Zahl N von Zeilen und einer ganzen Zahl M von Spalten und aus einer Anzahl N x M von Pixeln, die gemäß einer ganzen Zahl Q von Leuchtdichtewerten codiert sind, aufgebaut sind, wobei das Verfahren darin besteht:

   - in jedem Bild eine Vorverarbeitung (1) zur Formgebung des Bildes auszuführen, um die Konturen zu glätten;
   - in jedem vorverarbeiteten Bild geschlossene Konturen zu extrahieren (2), deren Dicken ein Pixel nicht übersteigen;
   - für jede geschlossene Kontur signifikante Parameter der Konturen zu extrahieren (3);
   - von einem Bild zum nächsten die erhaltenen Parameter zu vergleichen, um so die Form eines Elements zu erkennen (4), und dann daraus seine Geschwindigkeit abzuleiten (5), dadurch gekennzeichnet, daß die Extraktion (2) der Konturen besteht aus:
   - einer Faltung (21) des aus der Vorverarbeitung (1) sich ergebenden Bildes mit einer Matrix aus Laplace-Koeffizienten

$$\begin{pmatrix} 0 & -1 & 0 \\ -1 & 4 & -1 \\ 0 & 1 & 0 \end{pmatrix}$$

   bis auf einen Multiplikationsfaktor $\alpha$,
   - einem Schwellenvergleich (22) des gefalteten Bildes mit einem Schwellenwert, der im wesentlichen gleich Q/2 ist, wobei die Faltung (21) besteht aus:
   - einer Faltung (211) eines Pixels i, j mit Leuchtdichte L(i, j) mit der Laplace-Matrix;
   - einer Speicherung (211) des Ergebnisses L'(i, j) der Faltung;
   - einer Ersetzung (213) von L(i, j) durch L'(i, j), sobald das Pixel i, j nicht mehr in den Faltungen verwendet wird.

2. Verfolgungsverfahren nach Anspruch 1, dadurch gekennzeichnet, daß die Vorverarbeitung (1) zur Formgebung des Bildes besteht aus:

   - einem Schwellenvergleich (11) des Bildes mit einem vorgegebenen Schwellenwert, der ermöglicht, sämtliche Pixel, deren Leuchtdichtecode größer als ein vorgegebener Schwellenwert ist, auf 0 zu setzen, und sämtliche anderen Pixel auf (Q - 1) zusetzen, um so ein binäres Bild zu erhalten;
   - wenigstens einer Folge aus einer Erosion (13) und einer Dilatation (14) des binären Bildes, was eine Glättung der Konturen ergibt.

3. Verfolgungsverfahren nach Anspruch 2, dadurch gekennzeichnet, daß die Folge aus einer Erosion (13) und einer Dilatation (14) des binären Bildes ausgeführt wird durch:

   - eine erste Faltung (121) des binären Bildes mit einer unitären Matrix der Dimension P, wobei P eine ungerade

ganze Zahl kleiner als die ganzen Zahlen N und M ist;

- einen ersten Schwellenvergleich (122) des gefalteten Bildes mit einem Schwellenwert, der im wesentlichen gleich Q/2 ist;
- eine erste Videoinversion (123) des schwellenverglichenen Bildes;
- eine zweite Faltung (121') des invertierten Bildes mit der unitären Matrix;
- einen zweiten Schwellenvergleich (122') des zweiten gefalteten Bildes mit einem Schwellenwert, der im wesentlichen gleich Q/2 ist; und
- eine zweite Videoinversion (123').

**4.** Verfolgungsverfahren nach Anspruch 3, dadurch gekennzeichnet, daß die erste und die zweite Faltung bestehen aus:

- einer Faltung (124) eines Pixels i, j mit Leuchtdichte L(i, j) mit der unitären Matrix;
- einer Speicherung (125) des Ergebnisses L'(i, j) der Faltung;
- einer Ersetzung (126) der Leuchtdichte L(i, j) durch die Leuchtdichte L'(i, j), sobald das Pixel i, j in den Faltungen nicht mehr verwendet wird.

**5.** Verfolgungsverfahren nach irgendeinem der vorangehenden Ansprüche, dadurch gekennzeichnet, daß die signifikanten Parameter der Konturen durch den Umfang $P_k$ und den Schwerpunkt $G_k$ jeder Kontur $C_k$ gebildet sind.

**6.** Verfolgungsverfahren nach Anspruch 5, dadurch gekennzeichnet, daß die Extraktion der Umfänge $P_k$ der Konturen $C_k$ darin besteht:

- rekursiv jedes Pixel der Konturen $C_k$ zu testen, indem in einer bestimmten Reihenfolge jene seiner acht Nachbarn gesucht werden, die erleuchtet sind;
- jedem Pixel eine Zustandsvariable zuzuordnen, die sich in den vier folgenden Zuständen befinden kann:
    - Zustand 0: nicht getestetes Pixel;
    - Zustand 1: Pixel, das der Kontur des getesteten Pixels zugehört, jedoch noch nicht getestet worden ist;
    - Zustand 2: Pixel, das der Kontur des getesteten Pixels zugehört und dem Test unterzogen worden ist;
    - Zustand 3: Pixel, das einer vorhergehenden Kontur zugehört,
- sämtliche Pixel zu zählen, für die die Zustandsvariable im Zustand 2 ist, wenn der Test beendet worden ist.

**7.** Verfolgungsverfahren nach Anspruch 6, dadurch gekennzeichnet, daß die vorgegebene Reihenfolge der Abtastung des Schirms entspricht.

**8.** Verfolgungsverfahren nach irgendeinem der Ansprüche 5 bis 7, dadurch gekennzeichnet, daß die Schwerpunkte $G_k$ durch ihre Abszissen und ihre Ordinaten bestimmt werden, indem der Mittelwert der Abszissen und der Mittelwert der Ordinaten der Pixel der Konturen $C_k$ gebildet werden.

**9.** Verfolgungsverfahren nach Anspruch 8, dadurch gekennzeichnet, daß die Form eines Elements erkannt (4) wird, wenn für zwei nacheinander verarbeitete Bilder die beiden gefundenen Umfänge $P_k'$ und $P_k$ nahezu gleich sind und wenn die beiden Schwerpunkte $G_k'$ und $G_k$ nahe beieinander liegen.

**10.** Verfolgungsverfahren nach Anspruch 9, dadurch gekennzeichnet, daß die Geschwindigkeit eines Elements aus der Schwerpunktverschiebung vom Punkt $G_k'$ zum Punkt $G_k$ abgeleitet wird.

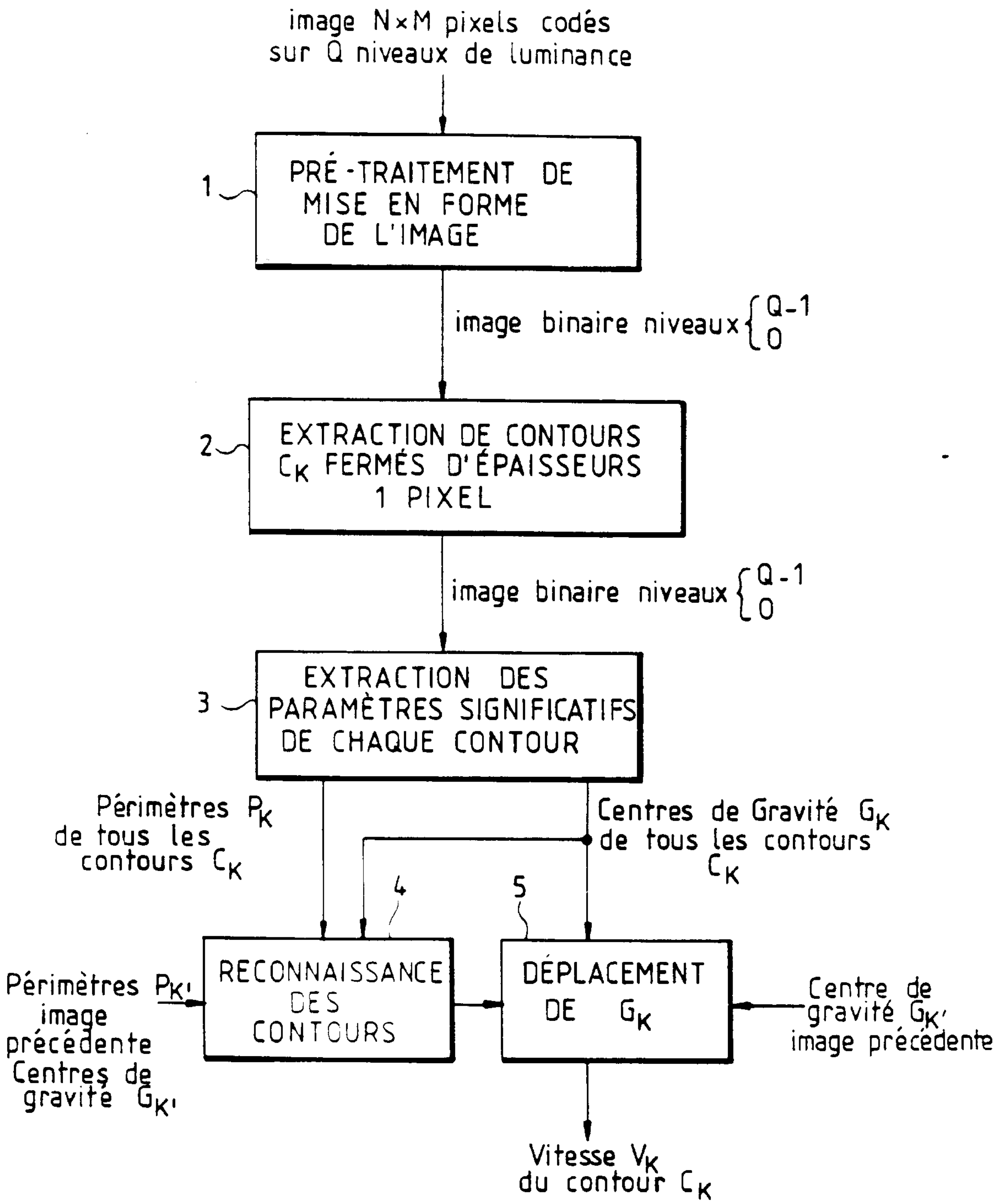
image N×M pixels codés
sur Q niveaux de luminance
1
PRÉ-TRAITEMENT DE
MISE EN FORME
DE L'IMAGE
image binaire niveaux Q-1 0
2
EXTRACTION DE CONTOURS
CK FERMÉS D'ÉPAISSEURS
1 PIXEL
image binaire niveaux Q-1 0
3
EXTRACTION DES
PARAMÈTRES SIGNIFICATIFS
DE CHAQUE CONTOUR
Périmètres PK
de tous les
contours CK
Centres de Gravité GK
de tous les contours
CK
4
5
Périmètres PK'
image
précédente
Centres de
gravité GK'
RECONNAISSANCE
DES
CONTOURS
DÉPLACEMENT
DE GK
Centre de
gravité GK'
image précédente
Vitesse VK
du contour CK

FIG.1

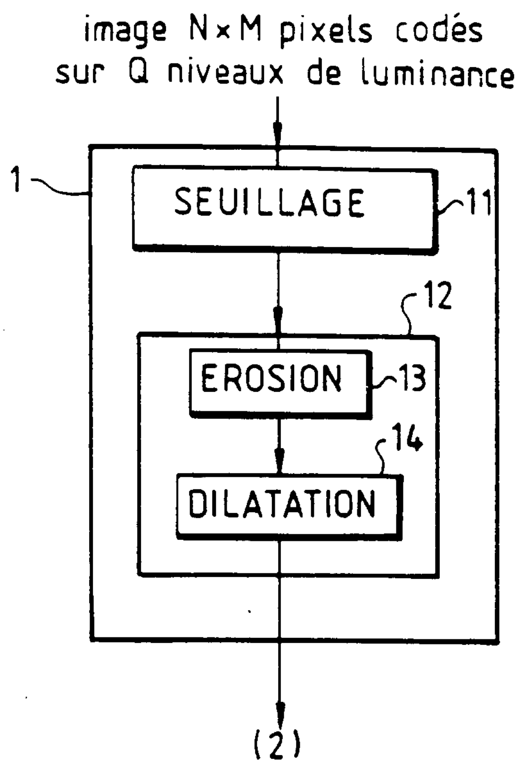
image N×M pixels codés
sur Q niveaux de luminance
1
SEUILLAGE
11
12
EROSION
13
14
DILATATION
(2)

FIG.2

FIG.3

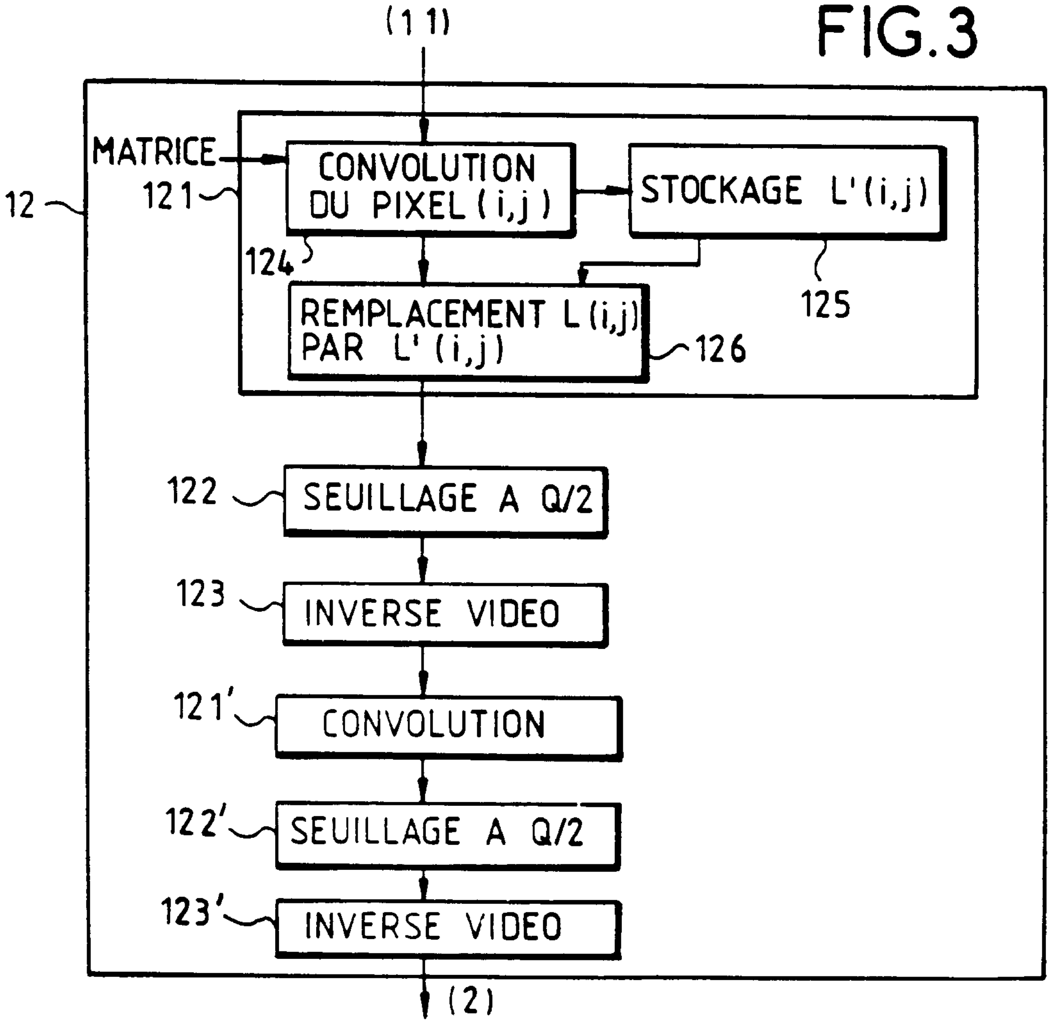
(11)
MATRICE
121
12
CONVOLUTION
DU PIXEL (i,j)
STOCKAGE L'(i,j)
124
REMPLACEMENT L(i,j)
PAR L'(i,j)
125
126
122
SEUILLAGE A Q/2
123
INVERSE VIDEO
121'
CONVOLUTION
122'
SEUILLAGE A Q/2
123'
INVERSE VIDEO
(2)

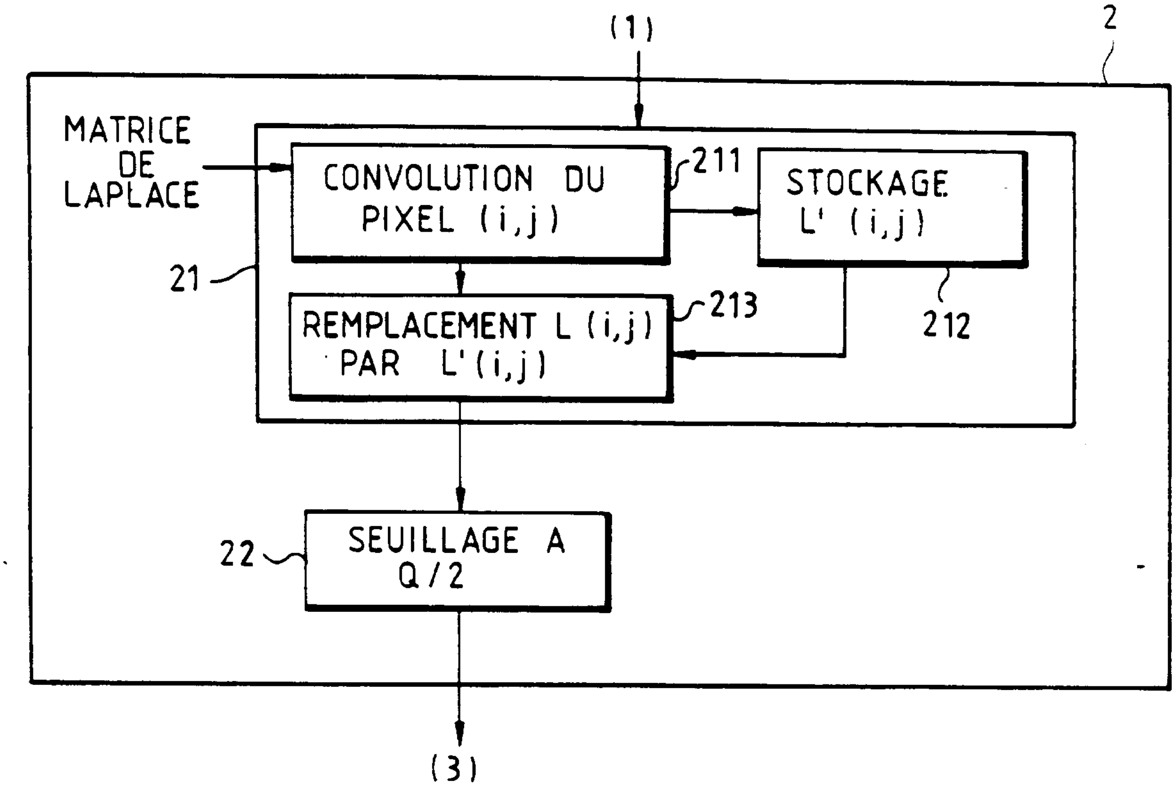
(1)
2
MATRICE
DE
LAPLACE
CONVOLUTION DU
PIXEL (i,j)
211
STOCKAGE
L' (i,j)
21
REMPLACEMENT L (i,j)
PAR L'(i,j)
213
212
22
SEUILLAGE A
Q/2
(3)

FIG.4

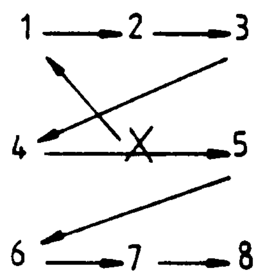
1
2
3
4
5
6
7
8

FIG.5